# EUROPÄISCHE PATENTSCHRIFT

(11) **EP 4 256 199 B1**
(45) Veröffentlichungstag und Bekanntmachung des Hinweises auf die Patenterteilung: **14.08.2024**
(21) Anmeldenummer: 21820539.1
(22) Anmeldetag: 26.11.2021
(51) Int. Cl.: F03D 9/25, F03D 15/00, H02K 7/102, H02K 7/18, H02K 1/20, H02K 1/32, H02K 9/197, H02K 21/16

(54) **GENERATOR-GETRIEBE-ANORDNUNG MIT BREMSE FÜR EINE WINDKRAFTANLAGE**
GENERATOR-GEARBOX-ARRANGEMENT WITH BRAKE FOR A WIND TURBINE
AGENCEMENT D'ENGRENAGE ET DE GÉNÉRATEUR COMPRENANT UN FREIN POUR ÉOLIENNE

(30) Priorität: 02.12.2020 EP 20211250
(43) Veröffentlichungstag der Anmeldung: 11.10.2023
(73) Patentinhaber: Flender GmbH, 46395 Bocholt (DE)
(72) Erfinder: JÖCKEL, Andreas, 90408 Nürnberg (DE)
(74) Vertreter: Michalski Hüttermann & Partner Patentanwälte mbB
(86) Internationale Anmeldenummer: PCT/EP2021/083149
(87) Internationale Veröffentlichungsnummer: WO 2022/117452

(56) Entgegenhaltungen:
- DE-A1- 102018 100 951
- FR-A1- 3 016 252

## Beschreibung

Die Erfindung betrifft eine Generator-Getriebe-Anordnung, eine Windkraftanlage mit einer Generator-Getriebe-Anordnung und eine Verwendung einer Magnetschienen-Bremsanordnung.

Aus US 8 376 708 B2 ist eine Windkraftanlagen mit einem Antriebsstrang mit Getriebe und Generator bekannt. Der Antriebsstrang weist dabei unter anderem ein mechanisches Bremssystem auf, das auf der dem Generator abgewandten Seite angeordnet ist.

Aus FR 3 016 252 A1 ist eine Windkraftanlagen mit einem Antriebsstrang mit Getriebe und Generator bekannt, bei welcher mit einem Statorgehäuse des Generators eine Scheibenbremse befestigt ist, die eine von einem Rotor des Generators abstehende Scheibe mit Hilfe von axial verlagerarer Reibscheiben mechanisch bremsen kann.

Derartige Anordnungen beanspruchen einen vergleichsweise gro-ßen axialen Bauraum.

Ausgehend davon liegt der Erfindung die Aufgabe zugrunde eine kompakte, leistungsfähige Generator-Getriebe-Anordnung, insbesondere einer Windkraftanlage zu schaffen. Dabei soll insbesondere die axiale Baulänge der Generator-Getriebe-Anordnung reduziert und kompaktiert werden. Der Antriebsstrang der Windkraftanlage soll außerdem einen vergleichsweise hohen Wirkungsgrad aufweisen.

Die Lösung der erfindungsgemäßen Aufgabe gelingt durch eine Generator-Getriebe-Anordnung mit den Merkmalen des Anspruchs 1, eine Windkraftanlage mit den Merkmalen des Anspruchs 14 sowie eine Verwendung mit den Merkmalen des Anspruchs 15. Bevorzugte Ausgestaltungen sind in den Unteransprüchen und der nachfolgenden Beschreibung angegeben.

Die Erfindung betrifft eine Generator-Getriebe-Anordnung für eine Windkraftanlage mit einem Funktionsbauteil und einer Magnetschienen-Bremsanordnung,
- wobei der Generator einen Stator und einen Rotor aufweist,
- wobei das Funktionsbauteil an einer Stirnseite des Generators angeordnet ist,
- wobei das Funktionsbauteil, insbesondere ein radial mittlerer Abschnitt des Funktionsbauteil, zumindest einen Fortsatz aufweist, der zum Rotor, insbesondere in einen Innenraum des Rotors, weist,
- wobei an dem Fortsatz zumindest Komponenten zumindest einer Magnetschienen-Bremsanordnung befestigt sind
- wobei eine Bremswirkung der Magnetschienen-Bremsanordnung auf einem Wirkprinzip einer elektromagnetischen Anziehung zwischen der Magnetschienen-Bremsanordnung mit dem Rotor oder mit dem Funktionsbauteil (9) beruht. Insbesondere ist die Generator-Getriebe-Anordnung Teil einer Windkraftanlage.

Die Lösung der erfindungsgemäßen Aufgabe gelingt auch durch eine Windkraftanlage mit einer erfindungsgemäßen Generator-Getriebe-Anordnung, wobei eine Betätigung einer Magnetschienen-Bremsanordnung in eine Regelstruktur der Windkraftanlage eingebettet ist.

Durch die erfindungsgemäße Anordnung der Magnetschienen-Bremsanordnung einer Generator-Getriebe-Einheit, insbesondere einer Windkraftanlage, zumindest abschnittsweise im Innenraum eines Rotors des Generators kann der Antriebsstrang der Windkraftanlage axial verkürzt ausgeführt werden. Damit kann eine Gondel der Windkraftanlage kürzer ausgeführt werden oder der nunmehr vergleichsweise gewonnene Bauraum anderweitig genutzt werden.

Als Generator ist dabei eine rotatorische dynamoelektrische Maschine vorgesehen, vorzugsweise eine Asynchronmaschine oder Synchronmaschine. Als Getriebe sind dabei vorzugsweise zwei- oder dreistufige Planetenradgetriebe vorgesehen.

Das Funktionsbauteil ist stationär, bewegt sich also im Betrieb der Windkraftanlage nicht mit dem Rotor oder Komponenten des Getriebes mit.

Das Funktionsbauteil, insbesondere der radial äußere Bereich weist Fortsätze für das Getriebe und den Generator auf.

Der radial mittlere Abschnitt des Funktionsbauteil weist einen oder mehrere Fortsätze auf, die zur Aufnahme bzw. zum Befestigen von zumindest Teilen einer Magnetschienen-Bremsanordnung geeignet sind.

Der radial innere Bereich des Funktionsbauteils weist Aufnahmemöglichkeiten z.B. einen Stutzen als Sitz für ein Lager auf.

Das Funktionsbauteil kann nur eine Abdeckung, ein Lagerschild mit und ohne Stutzen zur Aufnahme eines Lagers sein. Ebenso kann das Funktionsbauteil Lagerkomponenten und/oder Kühlkomponenten, als auch Flanschfortsätze von Getriebe und oder Generator am radial äußeren Bereich des Funktionsbauteils aufweisen.

Das Funktionsbauteil weist somit einen Generatorflanschfortsatz und einen Getriebeflanschfortsatz auf. Diese Flanschfortsätze sind für die Aufnahme zumindest von Teilen des Generators bzw. von Teilen des Getriebes oder deren Gehäuse geeignet.

Der Generatorflanschfortsatz und der Getriebeflanschfortsatz sind in axial unterschiedliche Richtungen ausgerichtet.

Vorzugsweise ist das Funktionsbauteil einstückig ausgeführt. Dadurch können geschraubte Übergangsstellen im Kraft- und Momentenfluss auch zwischen den einzelnen oben erwähnten Komponenten, unter anderem wie Generatorflanschfortsatz und Getriebeflanschfortsatz vermieden werden.

Dazu ist das Funktionsbauteil als Gussteil ausgeführt oder aus Vollmaterial spanabhebend hergestellt.

In einer weiteren Ausführungsform sind zumindest Teile bzw. Abschnitte des Funktionsbauteils bearbeitet, also gefräst, geschliffen etc. Ebenso ist es möglich, zumindest einige Komponenten, wie Generatorflanschfortsatz, Getriebeflanschfortsatz, Stutzen und/oder andere Fortsätze mittels Additive Manufactoring zumindest abschnittsweise stoffschlüssig zu ergänzen.

Dies gestattet auch die Schaffung zusätzlicher Formgebungen/ Rippen/Ausnehmungen, die einer Versteifung des Funktionsbauteils, Schaffung von Kühlkanälen oder Schmierkanälen innerhalb des Funktionsbauteils oder zumindest einer seiner Komponenten dienen.

Ebenso können die oben aufgeführten Komponenten des Funktionsbauteils, wie Fortsätze, Stutzen etc. auch angeschweißt oder z.B. mittels Schraubverbindung lösbar befestigt sein.

Die Bremswirkung der Magnetschienen-Bremsanordnung beruht auf einem Wirkprinzip der elektromagnetischen Anziehung zwischen der Magnetschienen-Bremsanordnung mit dem Rotor und/oder mit dem Funktionsbauteil. Die Anziehungskräfte der elektromagnetischen Anziehung können durch die Radialkräfte elektromagnetischer Pole erzeugt werden, wobei insbesondere die elektromagnetischen Pole nur von einer zuschaltbaren Batterie gespeist werden. Zur Betätigung der nach dem Prinzip der Magnetschienenbremse aufgebauten Magnetschienen-Bremsanordnung ist es ausreichend, wenn lediglich eine Batterie aktiviert wird, um die elektromagnetischen Pole mit elektrischer Energie, insbesondere Gleichstrom, zu versorgen und durch die aufgeprägten Radialkräfte ein Bremsen des Rotors an dem, insbesondere unbeweglich feststehenden, Funktionsbauteil durch die elektromagnetischen Polen zu erreichen. Beispielsweise sind an dem mindestens einen Fortsatz radial innerhalb eines elektromagnetisch anziehbaren Teils des Rotors mindestens ein elektromagnetischer Pol vorgesehen, der im aktivierten Zustand ein elektromagnetisches Feld erzeugt, welches versucht den Rotor anzuziehen und dadurch abbremst. Hierbei kann eine rein elektromagnetische und dadurch nahezu verschleißfreie Abbremsung des Rotors erfolgen und/oder ein, insbesondere drehfest mit dem Funktionsbauteil befestigtes, Bremselement elektromagnetisch an den Rotor elektromagnetisch angezogen werden, um zusätzlich oder alternativ eine mechanische Bremsung des Rotors zu erreichen.

Eine erfindungsgemäße Magnetschienen-Bremsanordnung kann Schleifschuhe mit eingebauten Elektromagneten aufweisen. Bei Stromfluss durch den Elektromagneten (Arbeitsstromprinzip) wird der Schleifschuh an den Rotor, insbesondere die Innenseite des Hohlzylinders gezogen bzw. gedrückt. Der axiale Abschnitt des Hohlzylinders weist Bremsflächen, insbesondere schienenartig ausgeformte Bremsflächen auf. Zwischen den sich bewegenden Bremsflächen und dem oder den darauf gepressten Schleifschuh bzw. den Schleifschuhen entsteht Reibung, die die kinetische Energie der Bewegung bzw. Rotation des Rotors in Wärme umwandelt bis die Bewegungsenergie des Antriebsstranges der Windkraftanlage "verbraucht" ist oder die Magnetschienen-Bremsanordnung deaktiviert wird. Außerdem kann eine zusätzliche Wirbelstrominduktion, insbesondere in einer schienenartig ausgeformten Bremsfläche auftreten, die eine entgegen der Rotation wirkende Kraft erzeugt. Da die Reibungskräfte mit sinkender Rotationsgeschwindigkeit zunehmen und die Wirbelstromkräfte abnehmen, kann eine nahezu lineare Bremswirkung der Magnetschienen-Bremsanordnung eintreten.

Die für eine an dem Rotor von der Magnetschienen-Bremsanordnung aufgebrachte Reibungskraft des Schleifschuhs beruht hierbei auf der elektromagnetischen Anziehung des Schleifschuhs an dem Rotor. Der in dem jeweiligen Schleifschuh eingebaute Elektromagnet ist insbesondere bewegungsfest mit dem Schleifschuh gefestigt. Der Elektromagnet wirkt dadurch nicht als ein Aktuator für eine Verlagerung des Schleifschuhs relativ zu dem Elektromagnet, sondern der bestromte Elektromagnet wirkt als elektromagnetischer Pol, der elektromagnetisch an den Rotor angezogen wird und hierbei den Schleifschuh mitnimmt. Insbesondere kann der Schleifschuh elektromagnetisch zwischen dem Rotor und dem an den Rotor elektromagnetisch angezogenen Elektromagneten mit einer zu einer Reibungskraft führenden Normalkraft verpresst werden. Die Höhe der Reibungskraft kann dadurch leicht über die dem Elektromagneten zugeführte elektrische Leistung eingestellt werden. Insbesondere ist es möglich eine über die Bremszeit zeitlich veränderliche Reibungskraft vorzusehen, so dass ein definiertes und optimales Abbremsen des Rotors erfolgen kann. Beispielsweise können durch Eigenschwingungen beim Bremsen verursachte Schallentwicklungen, insbesondere Bremskreischen oder Bremsquietschen, vermieden werden, indem die zugeführte elektrische Leistung einem entsprechend vorgegebenen, vorzugsweise von der aktuellen Drehzahl des Rotors abhängigen, Profilverlauf folgt.

Der Rotor weist eine Rotortragstruktur auf, an deren radialem Außenumfang ein Rotorblechpaket mit Permanentmagneten, einem Kurzschlusskäfigläufer oder einem Wicklungssystem angeordnet ist. Dieses Blechpaket ist mit einem Hohlzylinder fest verbunden, beispielsweise aufgeschrumpft. Der Hohlzylinder ist mit Verbindungelementen, insbesondere einer Speichenstruktur mit einer Rotornabe verbunden. Die Speichenstruktur überträgt Antriebs- aber auch Bremsmomente von und auf die Getriebeabtriebswelle. Durch die Speichenstruktur der Verbindungselemente wird das Gewicht der Rotortragestruktur reduziert. Der Hohlzylinder oder zumindest axiale Abschnitte des Hohlzylinders weisen außerdem an dessen Innenumfang Bremsflächen auf. Eine Bremswirkung durch die Magnetschienen-Bremsanordnung wird dabei erzielt, wenn die Schleifschuhe der Magnetschienen-Bremsanordnung gegen die Bremsfläche drücken.

Das Funktionsbauteil, insbesondere das Mittenteil, weist zumindest einen Fortsatz auf. Dieser Fortsatz, der in den Generatorraum ragt, ist umfänglich verlaufend ausgeführt oder als mehrere abschnittsweise umfänglich verlaufende Fortsätze ausgeführt, an denen zumindest Komponenten der Magnetschienen-Bremsanordnung angebracht sind.

Im Generatorraum, im Bereich des Funktionsbauteils ist nunmehr eine Magnetschienen-Bremsenanordnung vorgesehen, die als Haltebremse oder Betriebsbremse der Windkraftanlage fungieren kann.

Bei der Magnetschienen-Bremsanordnung ist der Gegenpart der Schleifschuhe ein Teil der Rotortragestruktur, insbesondere ein dementsprechend bereitgestellter, ausgedrehter Hohlzylinder oder einer mit einer radial nach innen weisenden Schiene versehender Hohlzylinder. Der Hohlzylinder dient dabei gleichzeitig als Versteifungselement der Rotortragstruktur und damit des Rotors des Generators.

Die elektrische Betätigungsenergie der Magnetschienen-Bremsanordnung, wird z.B. von einer Batterie bereitgestellt und dabei insbesondere über das Funktionsbauteil z.B. den Generatorflanschfortsatz und/oder den Getriebeflanschfortsatz geführt. Die Betätigung der Schleifschuhe der Magnetschienen-Bremsanordnung erfolgt beispielsweise entweder durch eine übergeordnete Regelstruktur der Windkraftanlage oder manuell. Dies beschreibt das Arbeitsstromprinzip.

Bei dem Ruhestromprinzip, bei dem beispielsweise ein Elektromagnet gegen eine Feder arbeitet, um den Schleifschuh abzuheben, wird bei Ausfall der Hilfsenergie, z.B. durch einen Drahtbruch, eine Bremsung eingeleitet. Dies ist als "failsafe" für sicherheitsbedingte Notbremsungen wichtig.

Insbesondere weist die Magnetschienen-Bremsenanordnung nicht nur einen Schleifschuh auf, sondern es sind an dem oder den Fortsätzen des radial mittleren Teils mehrere Schleifschuhe angeordnet, die zusammen oder alternierend betätigbar sind. Die Schleifschuhe und deren komplementären Bremsflächen können innerhalb der Innenfläche des Hohlzylinders axial versetzt angeordnet sein. Dies kann die Torsionswirkung aufgrund der Bremsung reduzieren und den Bremsabrieb auf mehrere Bremsanordnungen verteilen.

Dadurch, dass die Rotortragstruktur speichenförmig ausgeführt ist, sind Wartungsarbeiten, z.B. Tausch von Bremsenkomponenten, einfach durchführbar. Dies gelingt z.B. im Stillstand der Anlage durch einen axialen Durchgriff zwischen den Speichen der Rotortragestruktur.

Durch die erfindungsgemäße Anordnung der Magnetschienen-Bremsanordnung an den Funktionsbauteilen und der damit erfindungsgemäßen kompakten Generator-Getriebe-Einheit ergibt sich eine Reduzierung der axialen Baulänge.

Aufgrund der fliegenden Lagerung des Generators, kann auf ein NDE-seitiges Lagerschild verzichtet werden.

Es ist somit auch keine Abdeckung der rotierenden Magnetschienen-Bremsenanordnung notwendig, da diese innerhalb des, nicht ohne weiteres, zugänglichen Innenraumes des Rotors angeordnet ist.

Aufgrund der Bremsanordnung an dem Funktionsbauteil ist ein kurzer, direkter Kraft-/Momentenfluss von der Bremsanordnung, insbesondere Schleifschuh und Bremsfläche, über den Rotor zum Getriebe gewährleistet. Dies kann insbesondere durch die Einstückigkeit des Funktionsbauteils unterstützt werden, indem keine geschraubten Übergangsstellen im Kraft- bzw. Momentenfluss vorhanden sind. Damit können auch die Notwendigkeiten von reibschlüssigen Verbindungen entfallen oder zumindest minimiert werden.

Die Generator-Getriebe-Anordnung einer Windkraftanlage mit einem gemeinsamen Funktionsbauteil dieser Generator-Getriebe-Einheit ist nunmehr, insbesondere axial, äußerst kompakt ausgeführt.

Die Kühlung zumindest dieses Generators kann durch Luft oder eine Kühlflüssigkeit erfolgen. In einer Ausführungsform ist ein Stator des Generators mit einer Ölkühlung versehen, während der Rotor eine Luftkühlung aufweist. Der Stator ist dabei durch ein Spaltrohr im Luftspalt der dynamoelektrischen Maschine vom Rotor abgeschottet. Mittels Ausnehmungen bzw. Kanälen im Blechpaket des Stators und/oder im Generatorflanschfortsatz ist eine Ölkühlung realisiert.

Das Funktionsbauteil weist in diesem Fall also Ausnehmungen bzw. Kanäle und Mittel zur Abdichtung des Spaltrohrs auf, z.B. Komponenten einer Labyrinthdichtung.

Das Getriebe ist insbesondere ein zwei- oder dreistufiges Planetenradgetriebe, das sich auf der der Generatorseite abgewandten Seite des Funktionsbauteils erstreckt. Auch dort kann eine Ölkühlung vorgesehen sein, zu dem im Getriebeflanschfortsatz Ausnehmungen bzw. Kanäle vorgesehen sind.

Das radial betrachtet mittlere Teil des Funktionsbauteils verbindet den Generatorflanschfortsatz und den Getriebeflanschfortsatz. Des Weiteren stellt dieses mittlere Teil eine mechanische Verbindung zu einem Stutzen her, der als Lagersitz geeignet ist, um eine Getriebeabtriebswelle, die mit dem Rotor drehfest und drehmomentenübertragend verbunden ist, zu lagern.

Als Lager sind dabei beispielsweise ein doppelreihiges Lager in X-Anordnung oder Kegelrollenlager etc. vorgesehen.

Um eine Schmierung der Lageranordnung zu gewährleisten, sind im Funktionsbauteil, insbesondere im mittleren Teil und/oder im Stutzen, Schmierkanäle vorgesehen.

Die Getriebeabtriebswelle ist mechanisch beispielsweise über eine lösbare Spannvorrichtung oder eine elektrisch isolierende Flanschverbindung mit einer Rotornabe der Rotortragstruktur drehmomentenübertragend verbunden.

Durch diesen einfachen kompakten Aufbau ergibt sich auch eine einfache Montage bzw. eine einfache Schnittstelle für ein Turner-Getriebe, das für eine Rotorblattmontage der Windkraftanlage erforderlich ist.

Durch die Mehrfachnutzung von Bauteilen, (z.B. Bremsfläche bzw. Bremsschiene als Versteifungselement, Funktionsbauteil unter anderem als gemeinsames Gussgehäuse mit Flansch für Generator und Getriebe, der als Kraftschluss für Bremskräfte und Momente dient etc.) wird eine kompakte Generator-Getriebe-Einheit einer Windkraftanlage geschaffen.

Eine Windkraftanlage mit einer derartigen erfindungsgemäßen Generator-Getriebe-Einheit, führt aufgrund der Mehrfachnutzung der Bauteile bzw. Komponenten zu einer äußerst kompakten und leistungsfähigen Windkraftanlage.

Durch eine Ölkühlung von Generator und/oder Getriebe und einer Luftkühlung, zumindest des Rotors, wird eine Windkraftanlage mit vergleichsweise hohem Wirkungsgrad bereitgestellt.

Die Erfindung betrifft ferner eine Verwendung einer, insbesondere aus einer Batterie mit Gleichstrom gespeisten, Magnetschienen-Bremsanordnung zum Bremsen eines Rotors einer Generator-Getriebe-Anordnung für eine Windkraftanlage, die insbesondere wie vorstehend beschreiben aus und weitergebildet sein kann, wobei eine Bremswirkung der Magnetschienen-Bremsanordnung auf einem Wirkprinzip einer elektromagnetischen Anziehung zwischen der Magnetschienen-Bremsanordnung mit dem Rotor beruht.

Die Erfindung sowie weitere Ausgestaltungen der Erfindung werden in den folgenden Ausführungsbeispielen prinzipiell dargestellt; darin zeigen:
- FIG 1: eine prinzipiell dargestellte Windkraftanlage,
- FIG 2: ein Funktionsteil, mit einem Generator,
- FIG 3: ein prinzipieller Querschnitt der MagnetschienenBremsanordnung.

Es sei angemerkt, dass sich Begriffe wie "axial", "radial", "tangential" etc. auf die in der jeweiligen Figur bzw. im jeweils beschriebenen Beispiel zum Einsatz kommende Achse beziehen. Mit anderen Worten beziehen sich die Richtungen axial, radial, tangential stets auf eine Drehachse des Rotors und damit auf die entsprechende Symmetrieachse des Stators.

Dabei beschreibt "axial" eine Richtung parallel zur Achse, "radial" beschreibt eine Richtung orthogonal zur Achse, auf diese zu oder auch von ihr weg, und "tangential" ist eine Richtung, die in konstantem radialen Abstand zur Achse 35 und bei konstanter Axialposition kreisförmig um die Achse 35 herum gerichtet ist. Der Ausdruck "in Umfangsrichtung" ist mit "tangential" gleichzusetzen.

In Bezug auf eine Fläche, beispielsweise eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Der Begriff "benachbart" soll im Zusammenhang mit Bauteilen, beispielsweise mit Spulen oder Statorzähnen, ausdrücken, dass sich im Falle von "benachbarten Bauteilen" zwischen diesen beiden Bauteilen insbesondere kein weiteres derartiges Bauteil befindet, sondern höchstens ein leerer Zwischenraum oder gegebenenfalls ein andersartiges Bauteil.

Unter dem Ausdruck "koaxiale Bauteile", beispielsweise koaxiale Komponenten wie Rotor und Stator, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse gegebenenfalls an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

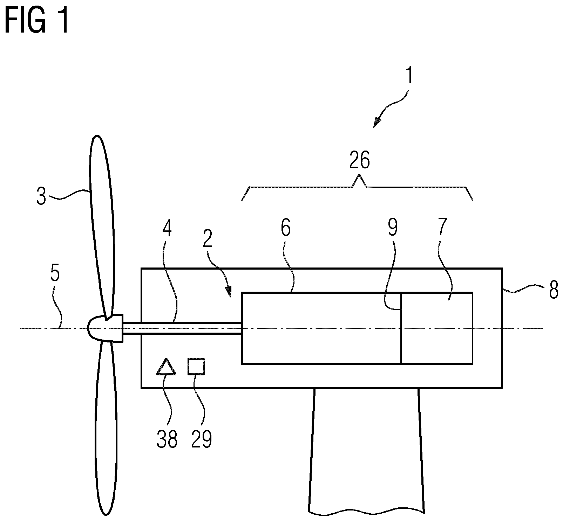

Die FIG 1 zeigt den oberen Teil einer Windkraftanlage 1, die Onshore oder Offshore aufgestellt sein kann. Im Energieerzeugungsmodus der Windkraftanlage 1 wird über einen Windrotor 3 die Windrotorwelle 4 um die Windrotorachse 5 in Drehung gesetzt. Über ein Getriebe 6 wird dabei ein Generator 7 angetrieben. Der Generator 7 ist über einen nicht näher dargestellten Umrichter mit einem übergeordneten elektrischen Netz elektrisch gekoppelt. Ein Antriebsstrang 2 setzt sich somit aus dem Windrotor 3, der Windrotorwelle 4, dem Getriebe 6 und dem Generator 7 zusammen.

Der Generator 7 und das Getriebe 6 sind in einer Gondel 8 der Windkraftanlage 1 angeordnet. In der Gondel 8 sind unter anderem auch Umrichter des Generators 7, Überwachungs- und Regelsysteme der Windkraftanlage 1 angeordnet. Des Weiteren sind in der Gondel 8 zumindest Komponenten, z.B. Wärmetauscher unterschiedlichster Kühlsysteme der Windkraftanlagenkomponenten, wie Generator 7, Getriebe 6 etc. vorgesehen.

Des Weiteren sind in der Gondel 8 nicht näher dargestellte Drehmomentstützen der Generator-Getriebe-Anordnung 26 vorhanden, die Antriebs- und Bremsmomente aufnehmen.

Getriebe 6 und Generator 7 können auch durch einen Wellenabschnitt voneinander getrennt sein. Dabei erhält dann der Generator 7 ein Funktionsbauteil 9 und das Getriebe 6 lediglich einen stirnseitigen Abschluss. Um dennoch eine axiale Kompaktheit zu erreichen ist u.a. entscheidend, dass eine Magnetschienen-Bremsanordnung 14 zumindest zum Teil radial innerhalb des Generators 7 bzw. innerhalb eines Rotors 15 des Generators 7 angeordnet ist. Dies wird ermöglicht, indem ein Funktionsbauteil 9 einen oder mehrere axial erstreckende Fortsätze 41 Richtung Rotor 15 aufweist, auf die später näher eingegangen wird.

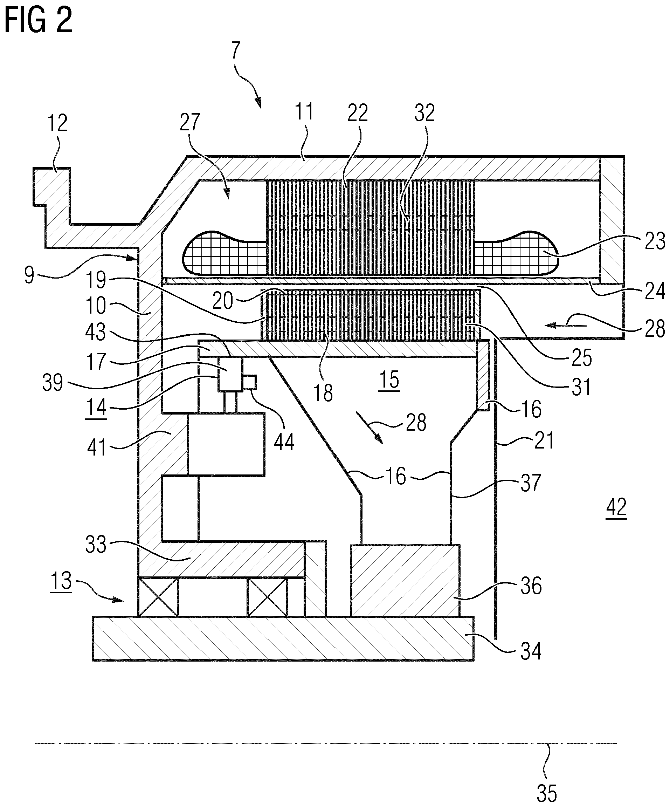

FIG 2 zeigt in einem prinzipiellen Teillängsschnitt des Generators 7 mit seinem Generatorflanschfortsatz 11, das Funktionsbauteil 9 und einen Getriebeflanschfortsatz 12.

Der Getriebeflanschfortsatz 12 nimmt zumindest Komponenten eines Getriebes 6, insbesondere eines zwei- oder dreistufigen Planetenradgetriebes auf, wie z.B. ein ortsfestes Hohlrad.

Aus dem Getriebe 6 ragt axial eine Getriebeabtriebswelle 34. Diese rotiert um eine Achse 35, die entweder in axialer Flucht der Windrotorachse 5 verläuft oder zu dieser achsparallel ausgerichtet ist, also koaxial angeordnet ist.

Die Getriebeabtriebswelle 34 - hier hohl ausgeführt - ist mit dem Rotor 15 des Generators 7 über eine Rotornabe 36 drehfest und drehmomentenübertragend verbunden.

Die Getriebeabtriebswelle 34 ist in einer Lageranordnung 13 gelagert, die in einem Stutzen 33 des Funktionsbauteils 9 positioniert ist. Nicht näher dargestellte Schmiermittelkanäle für die Lageranordnung 13 können dabei innerhalb des Stutzens 33 und/oder des Funktionsbauteils 9 vorgesehen sein.

Das Drehmoment im Energieerzeugungsmodus, aber auch ein Bremsmoment wird über die Welle-Nabe-Verbindung zwischen der Getriebeabtriebswelle 34 und der Rotornabe 36 übertragen.

Die Welle-Nabe-Verbindung kann dabei grundsätzlich als form- oder kraftschlüssige Verbindungen ausgeführt sein. Aufgrund der anstehenden Beanspruchungen, wie große und/oder wechselseitige Beanspruchungen, werden vorzugsweise Spannsätze oder Pressverbände eingesetzt.

Der Rotor 15 weist eine Rotortragstruktur 16 auf, die die Rotornabe 36, einen Hohlzylinder 17 und Versteifungselemente bzw. Verbindungselemente, wie z.B. Speichen 37 beinhaltet. Der zumindest eine Bremsfläche 43 aufweisende Hohlzylinder 17 wirkt zusätzlich versteifend auf die Rotortragstruktur 16.

Die Bremsfläche 43 des Hohlzylinders 17 kann als Fläche innerhalb des Hohlzylinders 17 ausgewiesen sein. Ebenso ist es möglich, dass auf der Innenseite des Hohlzylinders 17 eine radial nach innen weisende Schienenanordnung als Bremsfläche 43 vorgesehen ist.

Das Funktionsbauteil 9 auf der dem Getriebe 6 zugewandten Seite, kann auch als Lagerschild des Generators 7 ausgebildet sein.

Zumindest einige Komponenten der Magnetschienen-Bremsanordnung 14 sind im Innenraum des Rotors 15 angeordnet, wenn auch nicht unbedingt radial innerhalb des Blechpakets 18 des Rotors 15.

Die Magnetschienen-Bremsanordnung 14 ist vorzugsweise auf einer Seite des Rotors 15, insbesondere der dem Funktionsbauteil 9 zugewandten Seite angeordnet. Dabei ist in dieser Darstellung die Bremsfläche 43 vor allem in einer axialen Verlängerung des Hohlzylinders 17 Richtung Funktionsbauteil 9, axial betrachtet außerhalb des Blechpakets 18 des Rotors 15 ausgebildet. Eine mehr axial mittige Anordnung der Bremsfläche 43 innerhalb des Hohlzylinders 17, also radial "unterhalb" des Blechpakets 18 des Rotors 15 kann die Torsionswirkung auf die Rotortragstruktur 16 während des Bremsens reduzieren.

Vorzugsweise ist die Rotortragstruktur 16, räumlich betrachtet, schalenförmig ausgeführt, um einem Stutzen 33, einer Lageranordnung 13 und/oder einer Bremsenanordnung 14 Bauraum zu bieten. Die Öffnung der "Schale" weist dabei zum Funktionsbauteil 9.

Umfänglich auf der Rotortragstruktur 16 angeordnet ist das Blechpaket 18 des Rotors 15, das durch Druckscheiben 19 paketiert ist. Das Rotorblechpaket 18 weist Permanentmagnete 20 auf, die sich in im Wesentlichen axial verlaufenden Ausnehmungen befinden. Diese Permanentmagnete 20 können auch an der Oberfläche des Blechpakets 18 angeordnet sein.

Ebenso können die Permanentmagnete 20 unter Berücksichtigung einer effizienten Magnetflussführung auch V-förmig im Blechpaket 18 angeordnet sein.

Der dem Funktionsbauteil 9 zugewandte Teil des Hohlzylinders 17 ist in dieser Ausführung zumindest abschnittsweise als Bremsfläche 43 ausgeführt.

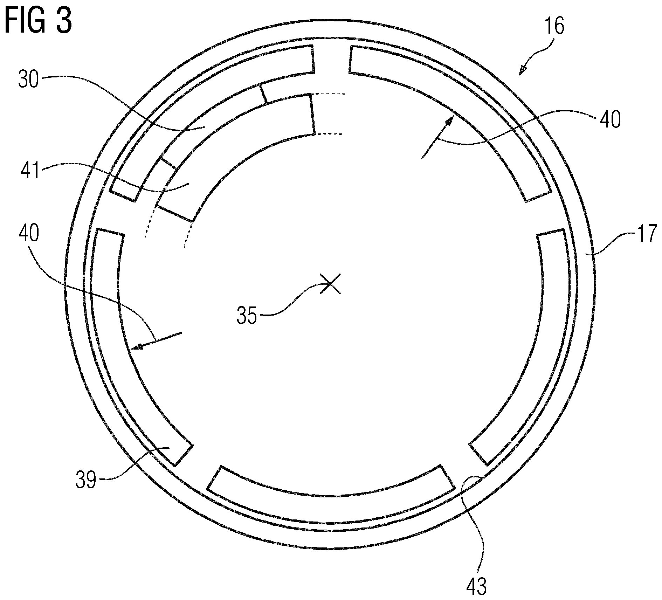

Die Schleifschuhe 39 sind an einem Fortsatz 41 des Funktionsbauteils 9 positioniert. Der Fortsatz 41 ist vorzugsweise als Ring, je nach Ausführung der Rotortragestruktur 16 am radial mittleren Teil des Funktionsbauteil 9 vorgesehen. Es können dort auch mehrere auf gleichem Radius verlaufende Fortsätze 41 vorgesehen sein, wie dies beispielsweise auch in FIG 3 gestrichelt angedeutet ist. Damit können entweder eine oder mehrere Magnetschienen-Bremsanordnungen 14 in diesem Bereich angeordnet werden. Dies kann der Bremskraftsteigerung und/ oder der Redundanz der Magnetschienen-Bremsanordnung 14 dienen.

Die Magnetschienen-Bremsanordnungen 14 sind in das übergeordnete Regelkonzept der Windkraftanlage 1 eingebunden. Damit können die Magnetschienen-Bremsanordnungen 14 oder falls mehrere Schleifschuhe 39 vorhanden sind, zumindest einige Schleifschuhe 39 Haltefunktionen erfüllen, als auch Betriebsbremsungen oder Notfallbremsungen durchführen, die zum Stillstand des Generators 7 und damit letztlich der Windkraftanlage 1 führen.

Über die NDE-Seite 42 des Rotors 15 kann nunmehr einfach eine Luftkühlung 28 realisiert werden. Dabei wird beispielsweise Luft im äußeren Bereich des Rotors 15 angesaugt und durch die Kühlkanäle 31 axial durch das Blechpaket 18 und/oder den Luftspalt 25 auf die dem Funktionsbauteil 9 zugewandten Seite des Rotors 15 geführt. Über die Magnetschienen-Bremsanordnung 14 und den Speichenzwischenraum 38 wird die erwärmte Luft dann axial wieder aus dem Rotor 15 auf der NDE-Seite 42 abgegeben. Der Luftaustritt ist also radial weiter innen als der Lufteinlass.

Der Luftstrom könnte aber auch umgedreht werden. Dies hätte jedoch den Nachteil, dass der Bremsabrieb der Magnetschienen-Bremsenanordnung 14 in den Bereich des Luftspalts 25 gelangt.

Der Luftstrom der Luftkühlung 28 wird entweder durch einen Fremdlüfter und/oder durch entsprechende Gestaltung der Speichen 37 generiert. Die Speichen 37 sind, um eine Luftkühlung 28 des Rotors 15 zu realisieren, derart gestaltet, dass entweder eine Sog- oder Druckwirkung bei Drehung des Rotors 15 generiert wird.

Der Stator 22 des Generators 7 weist ein Blechpaket auf, in dem ein Wicklungssystem 30 angeordnet ist, das an den Stirnseiten des Stators 22 Wickelköpfe 23 ausbildet. Der Stator 22 ist zumindest auf der Seite des Luftspaltes 25 durch ein Spaltrohr 24 abgedichtet. Damit ist eine Flüssigkeitskühlung des Stators 22, insbesondere eine Ölkühlung 27 möglich. Auf der dem Funktionsbauteil 9 zugewandten Seite weist das Funktionsbauteil 9 Mittel zur Positionierung und/oder einer Spaltrohrdichtung 26 auf. Im bzw. am Blechpaket des Stators 22 und/oder den Nuten des Stators 22 im Bereich eines Wicklungssystems und/oder an der dem Stator 22 zugewandten Seite des Generatorflanschfortsatzes 11 sind Kühlkanäle 32 des Stators 22 und/oder auch Verteilungskanäle vorgesehen. Diese können auch innerhalb des Generatorflanschfortsatzes 11 verlaufen.

Die Magnetschienen-Bremsanordnung 14 ist in das übergeordnete Regelkonzept der Windkraftanlage 1 eingebunden. Damit können die Bremsanordnungen 14 Haltefunktionen und Betriebsbremsungen, aber auch Notfallbremsungen durchführen. Bei mehreren unabhängig voneinander agierenden Magnetschienen-Bremsanordnungen 14 kann dies der Bremskraftsteigerung und/oder der Redundanz der Magnetschienen-Bremsanordnung 14 dienen.

Zusätzliche Sensoren 44 in bzw. an der Magnetschienen-Bremsanordnung 14, sind mit der übergeordneten Regeleinrichtung 29 verbunden und können sowohl die Bremskraft, als auch Abnutzung, und die Anzahl der Bremsvorgänge etc. überwachen.

Die elektrische Betätigungsenergie der Magnetschienen-Bremsanordnung 14, wird z.B. von einer Batterie 38 bereitgestellt, die in der Gondel 8, insbesondere in der Nähe der Generator-Getriebe-Einheit 26 angeordnet ist.

Grundsätzlich ist durch den beschriebenen Aufbau der erfindungsgemäßen Generator-Getriebe-Einheit mit dem erfindungsgemäßen Funktionsbauteils 9 eine kompakte Ausführung gewährleistet, insbesondere in axialer Richtung. Der Generator 7 ist fliegend gelagert, so dass auf der NDE-Seite 42 kein Lagerschild vorzusehen ist. Es kann lediglich eine Abdeckung 21 vorgesehen werden, die dementsprechende Luft-Aus- und Luft-Einlassöffnungen aufweist. Diese Abdeckung 21 ist vorzugsweise aus GFK.

Die Betätigungsenergie der jeweiligen Magnetschienen-Bremsanordnungen 14 wird z.B. von einer Batterie 38 bereitgestellt, die vorteilhafterweise in der Nähe des Funktionsbauteils 9, z.B. den Generatorflanschfortsatz 11 und/oder den Getriebeflanschfortsatz 12 angeordnet ist. Diese Magnetschienen-Bremsanordnung 14 wird entweder durch eine übergeordnete Regelstruktur 29 oder manuell angesteuert und aktiviert bzw. deaktiviert.

FIG 3 zeigt einen prinzipiellen Teilquerschnitt der Magnetschienen-Bremsanordnung 14. Dabei ist die Bremsfläche 43 auf der Innenseite des Hohlzylinders 17 dargestellt. Die Bremsflächen 43 können auch als Schienen ausgeführt sein, die von der Innenseite des Hohlzylinders 17 radial nach innen weisen. Schleifschuhe 39, die im dargestellten Fall noch von der Bremsfläche 43 beabstandet sind, drücken im Betätigungsfall Richtung 40 nach außen und generieren so durch Reibung auf der Bremsfläche 43 die angestrebte Bremswirkung des Rotors 15 und damit des Getriebes 6 und letztlich der Windkraftanlage 1.

Schleifschuhe 39 und Bremsflächen 43 bzw. Schienen sind komplementär zueinander, um eine möglichst hohe Bremskraft zu erzielen.

An dem oder den Fortsätzen 41 sind dazu beispielsweise Aktoren 30 vorgesehen, die bei dementsprechender Ansteuerung eine radiale Bewegung der Schleifschuhe 39 in Richtung 40 auf die Bremsfläche 43 bewirken.

Die Magnetschienen-Bremsanordnung 14 kann dabei einen oder mehrere Schleifschuhe 39 - im vorliegende Fall fünf Schleifschuhe 39 - aufweisen, die gemeinsam oder einzeln ansteuerbar sind.

Diese zum Teil rotierende Komponenten der Magnetschienen-Bremsanordnung 14 müssen aufgrund ihres schwer zugänglichen Einbauortes nicht zusätzlich abgedeckt werden. Jedoch kann eine Abdeckung sinnvoll sein, um den Schmutzpartikel vom Innenraum des Rotors 15 fernzuhalten.

Der Rotorinnenraum lässt sich auch vergleichsweise einfach durch eine Abdeckung 21 abschotten.

In einer Ausführung weist der Stator 22 und das Getriebe 6 eine Ölkühlung auf. Dabei sind getrennte Kühlkreisläufe aber auch ein gemeinsamer Kühlkreislauf denkbar. Der Rotor 15 des Generators 7 wird dabei mittels Luft gekühlt.

Dabei können die Blechpakete von Stator 22 und/oder Rotor 15 axial durchgängig gestapelt sein. Es sind aber sowohl beim Stator 22 und/oder auch beim Rotor 15 Blechpakete umsetzbar, die sich axial aus mehreren voneinander beabstandeten Teilblechpaketen zusammensetzen, um zusätzliche radiale Kühlspalte zu schaffen.

Als Generator 7 ist dabei eine rotatorische dynamoelektrische Maschine vorgesehen, vorzugsweise eine Asynchronmaschine oder Synchronmaschine. Dabei sind Polpaarzahlen von zwei bis dreißig vorstellbar.

Dabei werden Übersetzungsverhältnisse zwischen Windrotorwelle 4 und Rotor 15 des Generators je nach Ausführung von 20 bis 200 angestrebt.

Um einen kompakten Antriebsstrang, also Generator-Getriebe-Anordnung 26 der Windkraftanlage 1 zu erhalten, müssen beispielsweise Getriebe 6 und Generator 7 nicht zwangsläufig über das beschriebene Funktionsbauteil 9 mechanisch zusammenhängen bzw. zusammenwirken, wie in FIG 1 dargestellt ist.

Vielmehr ist alternativ auch denkbar, dass das Getriebe 6 und der Generator 7 insbesondere axial voneinander getrennt angeordnet sind. Wichtig ist, dass zumindest Komponenten der Magnetschienen-Bremsanordnung 14 axial betrachtet zumindest teilweise innerhalb des Rotors 15 und/oder des Stators 22 angeordnet sind.

Die erzielten Bremsmomente sind umso größer je größer der Abstand des Hohlzylinders 17 und damit der Bremsfläche 43 von der Getriebeabtriebswelle 34 ist.

Die Grundidee - eine Magnetschienen-Bremsanordnung 14 axial innerhalb des Generators 7 anzuordnen - lässt sich insbesondere auch bei direktangetriebenen Innenläufergeneratoren einer Windkraftanlage 1 realisieren.

## Patentansprüche

1. Generator-Getriebe-Anordnung (26) für eine Windkraftanlage (1) mit einem Funktionsbauteil (9) und
einer Magnetschienen-Bremsanordnung (14),
wobei der Generator (7) einen Stator (22) und einen Rotor (15) aufweist,
wobei das Funktionsbauteil (9) an einer Stirnseite des Generators (7) angeordnet ist,
wobei das Funktionsbauteil (9) zumindest einen Fortsatz (41) aufweist, der zum Rotor (15) weist,
wobei an dem Fortsatz (41) zumindest Komponenten der zumindest einen Magnetschienen-Bremsanordnung (14) befestigt sind,
wobei eine Bremswirkung der Magnetschienen-Bremsanordnung (14) auf einem Wirkprinzip einer elektromagnetischen Anziehung zwischen der Magnetschienen-Bremsanordnung (14) mit dem Rotor (15) oder mit dem Funktionsbauteil (9) beruht.

2. Generator-Getriebe-Anordnung (26) einer Windkraftanlage (1) nach Anspruch 1, **dadurch gekennzeichnet, dass** die Magnetschienen-Bremsanordnung (14) zumindest einen ortsfesten Schleifschuh (39) und eine dazu komplementäre Bremsfläche (43) am Rotor (15), insbesondere an einer Rotortragstruktur (16) aufweist.

3. Generator-Getriebe-Anordnung (26) einer Windkraftanlage (1) nach Anspruch 1 oder 2, **dadurch gekennzeichnet, dass** der Rotor (15) eine Rotortragstruktur (16) aufweist, wobei ein Hohlzylinder ein Blechpaket (18) des Rotors (15) trägt und über Verbindungselemente, insbesondere Speichenanordnungen mit einer Rotornabe (36) drehfest fixiert ist.

4. Generator-Getriebe-Anordnung (26) einer Windkraftanlage (1) nach Anspruch 3, **dadurch gekennzeichnet, dass** der Hohlzylinder Bremsflächen (43) aufweist, wobei zumindest ein axialer Abschnitt des Hohlzylinders (17) als Bremsfläche (43) ausgebildet ist oder eine Bremsfläche (43) am Hohlzylinder (17) befestigt ist.

5. Generator-Getriebe-Anordnung einer Windkraftanlage (1) nach einem der vorhergehenden Ansprüche, **dadurch gekennzeichnet, dass** an einem Fortsatz (41) des Funktionsbauteils (9) zumindest eine Magnetschienen-Bremsanordnung (14) vorgesehen ist, so dass sich umfänglich betrachtet, im Bereich des zu dem Funktionsbauteil (9) weisenden Abschnitt der Rotortragstruktur (16) eine oder mehrere Magnetschienen-Bremsanordnungen (14) befinden.

6. Generator-Getriebe-Anordnung (26) einer Windkraftanlage (1) nach einem der vorhergehenden Ansprüche, **dadurch gekennzeichnet, dass** das Funktionsbauteil (9), an einer Stirnseite des Generators (7) angeordnet ist, das zum Getriebe (6) weist.

7. Generator-Getriebe-Anordnung (26) einer Windkraftanlage (1) nach Anspruch 2, oder nach Anspruch 2 und einem der Ansprüche 3-6, **dadurch gekennzeichnet, dass** die Schleifschuhe (39) von der Bremsfläche (43) aus betrachtet konvex ausgeführt sind.

8. Generator-Getriebe-Anordnung (26) einer Windkraftanlage (1) nach einem der vorhergehenden Ansprüche, **dadurch gekennzeichnet , dass** das Getriebe (6) und der Generator (7) direkt am Funktionsbauteil (9) angeordnet sind und so einen jeweiligen stirnseitigen Abschluss von Generator (7) und Getriebe (6) schaffen.

9. Generator-Getriebe-Anordnung (26) einer Windkraftanlage (1) nach einem der vorhergehenden Ansprüche, **dadurch gekennzeichnet, dass** das Funktionsbauteil (9) am radial äußeren Bereich einen Generatorflanschfortsatz (11) und einen Getriebeflanschfortsatz (12) aufweist, wobei sich Generatorflanschfortsatz (11) und Getriebeflanschfortsatz (12) in axial unterschiedliche Richtungen erstrecken.

10. Generator-Getriebe-Anordnung (26) einer Windkraftanlage (1) nach Anspruch 9, **dadurch gekennzeichnet, dass** der Generatorflanschfortsatz (11) zumindest einen Abschnitt eines Gehäuses des Generators (7) bildet und/oder der Getriebeflanschfortsatz (12) zumindest einen Abschnitt eines Gehäuses des Getriebes (6) bildet.

11. Generator-Getriebe-Anordnung (26) einer Windkraftanlage (1) nach einem der vorhergehenden Ansprüche, **dadurch gekennzeichnet , dass** das Funktionsbauteil (9) im radial inneren Bereich einen Stutzen (33) aufweist, der zumindest als Lagersitz geeignet ist.

12. Generator-Getriebe-Anordnung (26) einer Windkraftanlage (1) nach Anspruch 11, **dadurch gekennzeichnet, dass** im Stutzen (33) eine Abtriebswelle (34) des Getriebes (6) gelagert ist, die mit dem Rotor (15) des Generators (7) drehmomentenübertragend verbunden ist.

13. Generator-Getriebe-Anordnung (26) einer Windkraftanlage (1) nach einem der vorhergehenden Ansprüche, **dadurch gekennzeichnet , dass** die Magnetschienen-Bremsanordnung (14) nach dem Ruhestromprinzip und/oder Arbeitsstromprinzip arbeitet.

14. Windkraftanlage (1) mit einer Generator-Getriebe-Anordnung (26) nach einem der vorhergehenden Ansprüche, **dadu rch gekennzeichnet** , dass eine Betätigung der Magnetschienen-Bremsanordnung (14) in eine Regelstruktur der Windkraftanlage (1) eingebettet ist.

15. Verwendung einer, insbesondere aus einer Batterie mit Gleichstrom gespeisten, Magnetschienen-Bremsanordnung (14) zum Bremsen eines Rotors (15) einer Generator-Getriebe-Anordnung (26) nach einem der Ansprüche 1 bis 13, für eine Windkraftanlage (1), insbesondere nach Anspruch 14, wobei eine Bremswirkung der Magnetschienen-Bremsanordnung (14) auf einem Wirkprinzip einer elektromagnetischen Anziehung zwischen der Magnetschienen-Bremsanordnung (14) mit dem Rotor (15) beruht.

## Claims

1. Generator-gearbox arrangement (26) for a wind turbine (1) with a functional component (9) and a magnetic rail brake arrangement (14),
wherein the generator (7) comprises a stator (22) and a rotor (15),
wherein the functional component (9) is arranged on an end side of the generator (7),
wherein the functional component (9) comprises at least one extension (41) which points towards the rotor (15), wherein at least component parts of at least one magnetic rail brake arrangement (14) are fastened to the extension (41),
wherein a braking action of the magnetic rail brake arrangement (14) is based on an operating principle of electromagnetic attraction between the magnetic rail brake arrangement (14) and the rotor (15) or the functional component (9).

2. Generator-gearbox arrangement (26) of a wind turbine (1) according to Claim 1, **characterized in that** the magnetic rail brake arrangement (14) comprises at least one positionally fixed grinding shoe (39) and a brake surface (43) which is complementary thereto on the rotor (15), in particular on a rotor support structure (16).

3. Generator-gearbox arrangement (26) of a wind turbine (1) according to Claim 1 or 2, **characterized in that** the rotor (15) comprises a rotor support structure (16), wherein a hollow cylinder bears a laminated core (18) of the rotor (15) and is fixed to a rotor hub (36) in a rotationally fixed manner by way of connecting elements, in particular spoke arrangements.

4. Generator-gearbox arrangement (26) of a wind turbine (1) according to Claim 3, **characterized in that** the hollow cylinder comprises brake surfaces (43), wherein at least one axial portion of the hollow cylinder (17) is in the form of a brake surface (43) or a brake surface (43) is fastened to the hollow cylinder (17).

5. Generator-gearbox arrangement of a wind turbine (1) according to one of the preceding claims, **characterized in that** at least one magnetic rail brake arrangement (14) is provided on an extension (41) of the functional component (9), such that one or more magnetic rail brake arrangements (14) are located circumferentially in the region of that portion of the rotor support structure (16) which points towards the functional component (9).

6. Generator-gearbox arrangement (26) of a wind turbine (1) according to one of the preceding claims, **characterized in that** the functional component (9) is arranged on an end side of the generator (7), which points towards the gearbox (6).

7. Generator-gearbox arrangement (26) of a wind turbine (1) according to Claim 2, or according to Claim 2 and one of Claims 3-6, **characterized in that** the grinding shoe (39), viewed from the brake surface (43), is of convex embodiment.

8. Generator-gearbox arrangement (26) of a wind turbine (1) according to one of the preceding claims, **characterized in that** the gearbox (6) and the generator (7) are arranged directly on the functional component (9) and thus create a respective end-side termination of generator (7) and gearbox (6).

9. Generator-gearbox arrangement (26) of a wind turbine (1) according to one of the preceding claims, **characterized in that** the functional component (9) comprises, in the radially outer region, a generator flange extension (11) and a gearbox flange extension (12), wherein generator flange extension (11) and gearbox flange extension (12) extend in axially different directions.

10. Generator-gearbox arrangement (26) of a wind turbine (1) according to Claim 9, **characterized in that** the generator flange extension (11) forms at least a portion of a housing of the generator (7) and/or the gearbox flange extension (12) forms at least a portion of a housing of the gearbox (6).

11. Generator-gearbox arrangement (26) of a wind turbine (1) according to one of the preceding claims, **characterized in that** the functional component (9) comprises, in the radially inner region, a connection piece (33) which is suitable at least as a bearing seat.

12. Generator-gearbox arrangement (26) of a wind turbine (1) according to Claim 11, **characterized in that** an output shaft (34) of the gearbox (6) is mounted in the connection piece (33), said output shaft being connected to the rotor (15) of the generator (7) in a torque-transmitting manner.

13. Generator-gearbox arrangement (26) of a wind turbine (1) according to one of the preceding claims, **characterized in that** the magnetic rail brake arrangement (14) operates in accordance with the closed circuit principle and/or open circuit principle.

14. Wind turbine (1) comprising a generator-gearbox arrangement (26) according to one of the preceding claims, **characterized in that** an actuating means of the magnetic rail brake arrangement (14) is embedded in a control structure of the wind turbine (1).

15. Use of a magnetic rail brake arrangement (14), which is in particular fed with direct current from a battery, for braking a rotor (15) of a generator-gearbox arrangement (26) according to one of Claims 1 to 13, for a wind turbine (1), in particular according to Claim 14, wherein a braking action of the magnetic rail brake arrangement (14) is based on an operating principle of electromagnetic attraction between the magnetic rail brake arrangement (14) and the rotor (15).

## Revendications

1. Agencement générateur-transmission (26) pour une éolienne (1) avec un composant fonctionnel (9) et un agencement de freinage à rail magnétique (14),
le générateur (7) présentant un stator (22) et un rotor (15),
le composant fonctionnel (9) étant agencé sur un côté frontal du générateur (7),
le composant fonctionnel (9) présentant au moins un prolongement (41) qui est dirigé vers le rotor (15),
au moins des éléments de l'au moins un agencement de freinage à rail magnétique (14) étant fixés sur le prolongement (41),
une action de freinage de l'agencement de freinage à rail magnétique (14) reposant sur un principe d'action d'une attraction électromagnétique entre l'agencement de freinage à rail magnétique (14) avec le rotor (15) ou avec le composant fonctionnel (9).

2. Agencement générateur-transmission (26) d'une éolienne (1) selon la revendication 1, **caractérisé en ce que** l'agencement de freinage à rail magnétique (14) présente au moins un patin de frottement fixe (39) et une surface de freinage (43) complémentaire sur le rotor (15), notamment sur une structure porteuse de rotor (16).

3. Agencement générateur-transmission (26) d'une éolienne (1) selon la revendication 1 ou 2, **caractérisé en ce que** le rotor (15) présente une structure porteuse de rotor (16), un cylindre creux portant un paquet de tôles (18) du rotor (15) et étant fixé de manière solidaire en rotation à un moyeu de rotor (36) par l'intermédiaire d'éléments de liaison, notamment d'agencements de rayons.

4. Agencement générateur-transmission (26) d'une éolienne (1) selon la revendication 3, **caractérisé en ce que** le cylindre creux présente des surfaces de freinage (43), au moins une section axiale du cylindre creux (17) étant réalisée sous forme de surface de freinage (43) ou une surface de freinage (43) étant fixée au cylindre creux (17).

5. Agencement générateur-transmission d'une éolienne (1) selon l'une quelconque des revendications précédentes, **caractérisé en ce qu'**au moins un agencement de freinage à rail magnétique (14) est prévu sur un prolongement (41) du composant fonctionnel (9), de telle sorte que, vu dans la circonférence, un ou plusieurs agencements de freinage à rail magnétique (14) se trouvent dans la zone de la section de la structure porteuse de rotor (16) orientée vers le composant fonctionnel (9).

6. Agencement générateur-transmission (26) d'une éolienne (1) selon l'une quelconque des revendications précédentes, **caractérisé en ce que** le composant fonctionnel (9) est agencé sur un côté frontal du générateur (7) qui est orienté vers la transmission (6).

7. Agencement générateur-transmission (26) d'une éolienne (1) selon la revendication 2, ou selon la revendication 2 et l'une quelconque des revendications 3 à 6, **caractérisé en ce que** les patins de frottement (39) sont conçus sous forme convexe lorsqu'ils sont vus depuis la surface de freinage (43).

8. Agencement générateur-transmission (26) d'une éolienne (1) selon l'une quelconque des revendications précédentes, **caractérisé en ce que** la transmission (6) et le générateur (7) sont agencés directement sur le composant fonctionnel (9) et créent ainsi une fermeture frontale respective du générateur (7) et de la transmission (6).

9. Agencement générateur-transmission (26) d'une éolienne (1) selon l'une quelconque des revendications précédentes, **caractérisé en ce que** le composant fonctionnel (9) présente dans la zone radialement extérieure un prolongement de bride de générateur (11) et un prolongement de bride de transmission (12), le prolongement de bride de générateur (11) et le prolongement de bride de transmission (12) s'étendant dans des directions axialement différentes.

10. Agencement générateur-transmission (26) d'une éolienne (1) selon la revendication 9, **caractérisé en ce que** le prolongement de bride de générateur (11) forme au moins une section d'un carter du générateur (7) et/ou le prolongement de bride de transmission (12) forme au moins une section d'un carter de la transmission (6).

11. Agencement générateur-transmission (26) d'une éolienne (1) selon l'une quelconque des revendications précédentes, **caractérisé en ce que** le composant fonctionnel (9) présente dans la zone radialement intérieure une tubulure (33) qui convient au moins comme siège de palier.

12. Agencement générateur-transmission (26) d'une éolienne (1) selon la revendication 11, **caractérisé en ce qu'**un arbre de sortie (34) de la transmission (6) est logé dans la tubulure (33), lequel est relié au rotor (15) du générateur (7) de manière à transmettre le couple.

13. Agencement générateur-transmission (26) d'une éolienne (1) selon l'une quelconque des revendications précédentes, **caractérisé en ce que** l'agencement de freinage à rail magnétique (14) fonctionne selon le principe du courant de repos et/ou le principe du courant de travail.

14. Eolienne (1) avec un agencement générateur-transmission (26) selon l'une quelconque des revendications précédentes, **caractérisé en ce qu'**un actionnement de l'agencement de freinage à rail magnétique (14) est intégré dans une structure de régulation de l'éolienne (1).

15. Utilisation d'un agencement de freinage à rail magnétique (14), notamment alimenté en courant continu à partir d'une batterie, pour freiner un rotor (15) d'un agencement générateur-transmission (26) selon l'une quelconque des revendications 1 à 13, pour une éolienne (1), notamment selon la revendication 14, une action de freinage de l'agencement de freinage à rail magnétique (14) reposant sur un principe d'action d'une attraction électromagnétique entre le dispositif de freinage à rail magnétique (14) et le rotor (15).
